# EUROPEAN PATENT SPECIFICATION

(11) **EP 3 017 230 B1**
(45) Date of publication and mention of the grant of the patent: **19.12.2018**
(21) Application number: 14733804.0
(22) Date of filing: 22.05.2014
(51) Int. Cl.: F16L 55/26

(54) **INTERNAL PIPE PIG WITH WIRELESS DATA TRANSMISSION SYSTEM**
INNENROHRMOLCH MIT DRAHTLOSEM DATENÜBERTRAGUNGSSYSTEM
RACLEUR DE TUYAU INTERNE AYANT UN SYSTÈME DE TRANSMISSION DE DONNÉES SANS FIL

(30) Priority: 02.07.2013 RU 2013130266
(43) Date of publication of application: 11.05.2016
(73) Proprietor: Baker Hughes, a GE company, LLC, Houston, TX 77073 (US)
(72) Inventor: MAYOROV, Sergey, Lukhovitsy Moscow Region 140500 (RU); SMIRNOV, Anatoly, Lukhovitsy Moscow Region 140402 (RU)
(74) Representative: Sloboshanin, Sergej
(86) International application number: PCT/US2014/039061
(87) International publication number: WO 2015/002701

(56) References cited:
- WO-A1-2013/088427
- WO-A2-02/070943
- JP-A- 2003 329 607
- US-A1- 2001 017 541
- US-A1- 2010 288 049
- US-A1- 2011 167 914

## Description

### BACKGROUND OF THE DISCLOSURE

The invention relates to systems for testing and observing a state of pipelines, more particular, to apparatuses for internal pipe non-destructive control of pipelines, in particular trunk oil and gas products pipelines, by passing, within the controlled pipeline, an apparatus comprising one or more transport modules moving within the pipeline by means of pressure of the product transported within the pipeline, control sensors located on a module body, sensitive to parameters reflecting a technical state of the pipeline, and means for measuring, processing, storing and transmitting measured data.

### PRIOR ART

Foreign items can present in pipeline cavities where pigs run. During movement of an internal pipe pig, such foreign items can rupture connecting cables that are outside of a pig body, including cables connecting sensors to data processing units located in the pig body.

The pig disclosed in US 7,354,348 uses mechanical cable protection. Such a protection, however, is too cumbrous and cannot be used to protect cables connected directly to non-destructive testing sensors as the number of such sensors is too great and there is not enough space to accommodate such mechanical protection.

The pig disclosed in WO2006/021421 uses wireless data transmission along the interior of a pipeline over a considerable distance of the pipeline axis. To this end, a powerful transmitter for sending high-frequency electromagnetic signals, which is installed inside the pig body, and a receiver with an antenna located within the pipeline at a remote distance from the pig, are used. The system is configured to transmit data eventually outside the pipeline and does not allow the connecting cables between various units of the electronic system to be removed from the pig design.

The pig disclosed in RU 2,216,686 includes a system for transmitting data and receiving control signals via high-frequency electromagnetic signals (of more than 1 kHz) which propagate within the pipeline and pass through a radio transparent slit in a pipeline fitting. The present system is also configured to transmit data eventually outside the pipeline or to receive control signals from an above-ground transmitter being placed over the pipeline, and does not allow the connecting cables between various units of the electronic system to be removed from the pig design.

WO 02/070943 A2 appears to describe an untethered, live, in-pipe inspection system that includes a self-propelled train having a plurality of modules, joint members for interconnecting adjacent modules, data collection components, and wireless communication components for transmitting collected data among the various modules and receiving control messages.

WO 2013/088427 A1 appears to describe an apparatus for determining the conditions of a pipeline that includes a cylindrical central body and a first crown of petals connected to the central body. Each petal extends from the central body until it touches the internal wall of the pipeline. Each petal comprises at least one deformation sensor and at least one roughness sensor.

JP 2003 329607 A appears to describe a pig having a first device and a first data conversion communication device in a first pig body. A second device and a second data conversion communication device are in a second pig body. A first antenna is provided on the first pig body and connected to the first data conversion communication device. A second antenna is provided on the second pig body connected to the second data conversion communication device.

US 2010/0288049 A1 describes an in-line inspection tool for inspecting the wall of a pipeline while travelling therethrough. The tool comprises an inspection assembly comprising one or more coils configured to generate and receive a magnetostrictive stress wave so that anomalies within the wall of the pipe being inspected may be detected.

US 2011/0167914 A1 describes an integrated multi-sensor device for use in an internal pipe pig. The multi-sensor device comprises a sensor head that is attached to a sensor arm. The sensor arm is attached to a sensor body. The sensor head may comprise various sensors and may be in contact with the inner wall of a pipe as the pig moves therethrough.

Further, from US 2001/0017541 A1, a magnetostrictive sensor technique is known for non-destructive evaluation of pipeline structures. For this purpose, sensor probes are positioned on an in-line inspection vehicle. The transmitting and receiving probes are attached to the in-line inspection vehicle by way of mechanical arms on opposing sides of the vehicle. The communication between the sensors and a data processor is performed over different wired lines.

### SUMMARY OF THE INVENTION

The invention is defined by an internal pipe pig for inspection of a pipeline and a method for internal-pipe testing a pipeline as set forth in the independent claims.

The present invention is directed to provide a method and a system for exchanging data and control signals for an internal pipe pig, said method and system allowing elimination of the disadvantages above based on use of wireless means for transmitting data and control signals between both internal pipe measurement, diagnosis and control means outside the pig and on-board processing and storing means. As a result, the higher operational reliability of the internal pipe pig is provided due to elimination of damages in connecting cables and seal failure of junction line connectors in collision with obstacles, and finally, improvement in the internal pipe pig equipment service life.

The present invention proposes to avoid cables between non-destructive testing sensors placed near a pipeline wall and data processing and accumulating units placed within the pig in a sealed capsule. Instead of cables, there are provided high-frequency transmission of data and control signals between various units of an electronic system through an internal pipe medium or accumulation of measured data directly in measuring units located near the pipeline wall, and transmission of measured data by means of a radio channel after the pig run is over.

The main variants of using the wireless data transmission according to the invention are as follows:
wireless transmission of measured data from non-destructive testing sensors located near the wall of the pipeline to the units of the data processing system, which are installed inside the pig body;
wireless transmission of measured data from the sensors located in one of the pig modules to the data processing units located in another module of the pig;
wireless transmission of control signals from an on-board control computer located in one of the pig modules to functional units remote from a
   housing of this module in order to control operating modes of said functional units;
wireless transmission of control signals from an external communication unit receiving control signals from the above-ground transmitter to the on-board control computer or directly to functional units remote from the external communication unit in order to control operating modes of the electronic system and said functional units;
wireless two-way communication between measuring units with a controllable operation mode, control units and measured data processing units;
wireless transmission of measured data accumulated directly in the measuring units to a data storage device of an external computer after the pig run is over.

According to an example useful to understand the invention, the pig comprises a body and an electronic system comprising wireless data transmission means which comprise at least one electromagnetic signal transmitter; the electronic system of the pig comprises measuring and data processing means which comprise at least one measuring unit and at least one data processing unit.

Wireless data transmission means are capable of transmitting digital data and contain transmitted digital data coding means.

The electromagnetic signal transmitter comprises an antenna embodied as a component of a printed circuit board.

Wireless data transmission means also comprise at least one electromagnetic signal receiver for receiving the transmitted data, which is connected to the data processing unit.

The data processing unit and the electromagnetic signal receiver are placed in a sealed capsule; an antenna is located outside the capsule, which is connected to the data processing unit; there is an electric connector in a housing of the capsule; said antenna is connected to the electromagnetic signal receiver via said electric connector.

The measuring unit is mechanically connected to the sealed capsule of the data processing unit, wherein at least a part of the antenna of the electromagnetic signal transmitter is within the line-of-sight range of at least a part of an antenna of the electromagnetic signal receiver.

A distance between the antenna of the electromagnetic signal transmitter and the antenna of the electromagnetic signal receiver does not exceed a value equal to a doubled interior diameter of the pipeline in which the pig has to be run.

In a preferred embodiment, the measuring unit comprises: at least one sensor; a sensor signal processing and control unit; an electromagnetic signal transmitter; and at least one power cell, wherein said sensor is connected to the sensor signal processing and control unit connected to the electromagnetic signal transmitter as well; the sensor signal processing and control unit comprises an amplifier and an analog-to-digital converter; an output of the sensor is connected to an input of the amplifier whose output is connected to an input of the analog-to-digital converter whose output is connected to an input of the electromagnetic signal transmitter.

The power cell is connected to electronic components of the measuring unit and is embodied as a rechargeable or non-rechargeable chemical power source; the electromagnetic signal transmitter comprises an antenna which is also installed in the measuring unit; the electromagnetic signal transmitter comprises a microcontroller which is capable of coding signals according to Wi-Fi, Bluetooth or ZigBee standards.

The electromagnetic signal transmitter is located in the measuring unit; all the electrical connections of the electromagnetic signal transmitter and the measuring unit are sealed using a compound or resilient sealants to protect them from an internal pipe medium.

The electronic system of the pig also comprises a control unit and a control electromagnetic signal transmitter connected thereto, and a control electromagnetic signal receiver as well. The control unit is capable of controlling the functioning modes of the pig sub-systems; the control electromagnetic signal transmitter comprises a unit for coding control signals; the control electromagnetic signal receiver comprises a unit for decoding control signals. The control unit comprises a programmable logic microchip or a programmable controller or a processor unit or an on-board computer.

The electronic system of the pig comprises at least one functional unit containing a unit designed to control said functional unit and connected to the control electromagnetic signal receiver.

According to a further development of the invention:
The functional unit is embodied as:
   - a measuring unit, or
   - a data processing unit, or
   - a data transmission unit to transmit the data to the outside of the pipeline, or
   - a unit for transmission and/or reception of signals for ground tracking a pig position in the pipeline, or
   - a unit for turning on/off power for the electronic system of the pig, or
   - a pig speed and/or acceleration control unit, or
   - an internal pipe medium flow control unit to control a medium passing from a pipeline interior area behind the pig to a pipeline interior area in front of the pig as it runs through the pipeline, or
   - a unit for environmental conditioning control within one or more sealed gas-filled capsules being parts of the pig
At least some of sensors are embodied as:
   - non-destructive testing sensors, or
   - travelled distance sensors, or
   - pig speed sensors, or
   - pig acceleration sensors, or
   - temperature sensors, or
   - pressure sensors.

The functional unit as a measuring unit also contains a control electromagnetic signal receiver which comprises a unit for decoding control electromagnetic signals; the control electromagnetic signal receiver is also connected to the sensor signal processing and control unit which is capable of switching between activation and/or interrogation modes for the sensors being parts of the measuring unit.

In one of embodiments, the pig comprises at least one measuring unit containing non-destructive testing sensors as ultrasonic transducers; the sensor signal processing and control unit is capable of controlling a time point of triggering an ultrasonic pulse by an ultrasonic transducer and/or an ultrasonic pulse frequency and/or an ultrasonic pulse direction and/or transmitting/receiving modes of the ultrasonic transducer and/or a time interval during which the ultrasonic transducer can receive ultrasonic pulses.

In another embodiment, the pig comprises at least one measuring unit containing non-destructive testing sensors as magnetic field sensors and/or pipeline interior geometry sensors, and also a sensor signal processing and control unit which is capable of setting sensor interrogation time points.

In a preferred embodiment, at least one of the functional units embodied as travelled distance measuring units comprises an odometer and an electromagnetic signal transmitter containing a controller connected to outputs of an odometer pulse counter being a part of the odometer.

In one of embodiments, the pig comprises several sealed capsules; the pig's electronic system units are located in said sealed capsules; the electromagnetic signal transmitter of said wireless data transmission means is installed in at least one of the capsules; the electromagnetic signal receiver of the wireless data transmission means is installed in at least one of other capsules.

In a preferred embodiment, at least one of the electromagnetic signal transmitters of said wireless data transmission means, which are installed in the sealed capsule, is embodied as a control electromagnetic signal transmitter, the control electromagnetic signal receiver is located in at least one of other sealed capsules.

There is an electric connector in the housing of the capsule containing the electromagnetic signal transmitter; the antenna of the electromagnetic signal transmitter is connected to the electromagnetic signal transmitter via said electric connector; at least a part of the electromagnetic signal transmitter antenna is located outside said sealed capsule.

According to development of the invention, at least one of the sealed capsules comprises a pig speed and/or acceleration measuring unit located therein, which contains an electromagnetic signal transmitter of said wireless data transmission means. The data processing unit and the electromagnetic signal receiver are located in another one of the sealed capsules.

In a preferred embodiment, the pig speed and/or acceleration measuring unit also comprises a control electromagnetic signal receiver, and the sealed capsule containing a data processing unit also comprises a control unit and a control electromagnetic signal transmitter.

In an example useful to understand the invention, the functional unit for transmitting data outside the pipeline (the external data transmission unit) comprises an additional electromagnetic signal transmitter (an external electromagnetic signal transmitter).

In one of possible examples useful to understand the invention, the external electromagnetic signal transmitter is embodied as a low-frequency electromagnetic signal transmitter.

In another example useful to understand the invention, the external electromagnetic signal transmitter is embodied as an electromagnetic signal transmitter for signaling along the interior of the pipeline to the electromagnetic signal receiver located outside the pig body.

In an example useful to understand the invention, the functional unit for transmitting and/or receiving the signals for ground tracking a pig position inside the pipeline comprises a low-frequency electromagnetic signal transmitter.

The functional unit for controlling the internal pipe medium flow comprises a drive control unit and a bypass device containing mechanical components which are capable of changing their position and/or orientation relatively to the pig body; the bypass device is capable of changing a value and/or direction of the internal pipe medium flow passing from the pipeline interior area behind the pig to the pipeline interior area in front of the pig in the course of its movement along the pipeline by changing the position and/or orientation of said mechanical components; the bypass device also comprises an electronically controlled drive capable of changing the position and/or orientation of said mechanical components of the bypass device; said drive is connected to said drive control unit.

In one of embodiments, the electronic system of the pig comprises a travelled distance measuring unit and/or a medium pressure measuring unit and/or a pig speed and/or acceleration measuring unit, each of said units being connected to the data processing unit or the electromagnetic signal transmitter for transmission of said signals to the data processing unit. The data processing unit, which receives data from the travelled distance measuring unit and/or the medium pressure measuring unit and/or the pig speed and/or acceleration measuring unit, is connected to the drive control unit or to the control signal transmitter for transmitting said signals to the drive control unit.

In one of embodiments, the control electromagnetic signal receiver is connected to said drive control unit.

In an example useful to understand the invention, the functional unit for pig speed and/or acceleration control comprises an internal pipe medium flow control unit and also a mechanism which regulates a friction force between the peripheral components of the pig body and the internal surface of the pipeline.

In an example useful to understand the invention, the functional unit for environmental conditioning control inside of one or more sealed gas-filled capsules, which are parts of the pig, comprises one or several fans and a fan control unit connected to the control electromagnetic signal receiver.

In an example useful to understand the invention, the electronic system of the pig comprises a control unit, a control electromagnetic signal transmitter and at least one measuring unit. The control unit is connected to the control electromagnetic signal transmitter; the measuring unit comprises at least one sensor, a sensor signal processing and control unit, a control electromagnetic signal receiver, an electromagnetic signal transmitter; the sensor signal processing and control unit comprises a data storage device and is connected to the sensor, the control electromagnetic signal receiver and the electromagnetic signal transmitter.

The present invention proposes transmission of data over small distances comparable with pig dimensions. This allows use of the low-power transmitter and provision for self-contained power supply for measuring units, receivers and transmitters of electromagnetic waves.

### BRIEF DESCRIPTION OF THE DRAWINGS

The invention will now be described by embodiments with reference to drawings which show as follows:
Fig. 1 is a schematic representation of an internal pipe pig embodied in accordance with a first example useful to understand the invention and placed within a pipeline;
Fig. 2 is a block diagram of electronic equipment of the internal pipe pig embodied in accordance with the first example useful to understand the invention;
Fig. 3 is a schematic representation of the internal pipe pig embodied in accordance with a second example useful to understand the invention and placed within the pipeline;

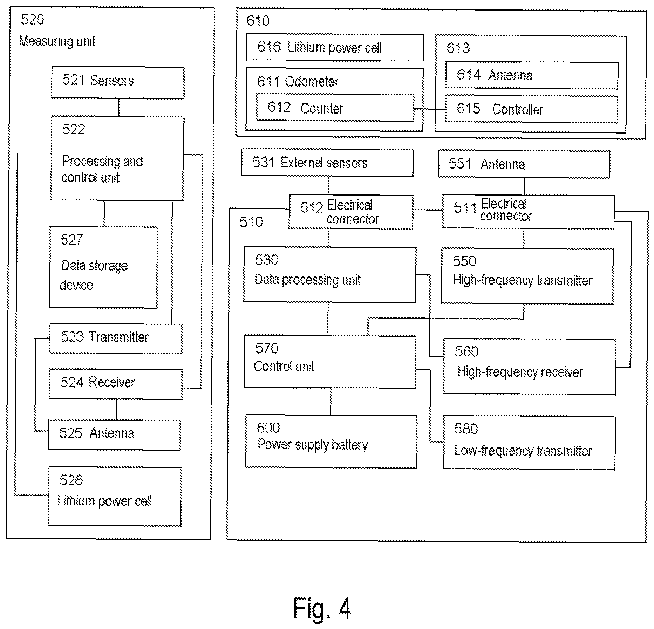

Fig. 4 is a block diagram of electronic equipment of the internal pipe pig embodied in accordance with the second example useful to understand of the invention

### FIRST EXAMPLE USEFUL TO UNDERSTAND THE INVENTION

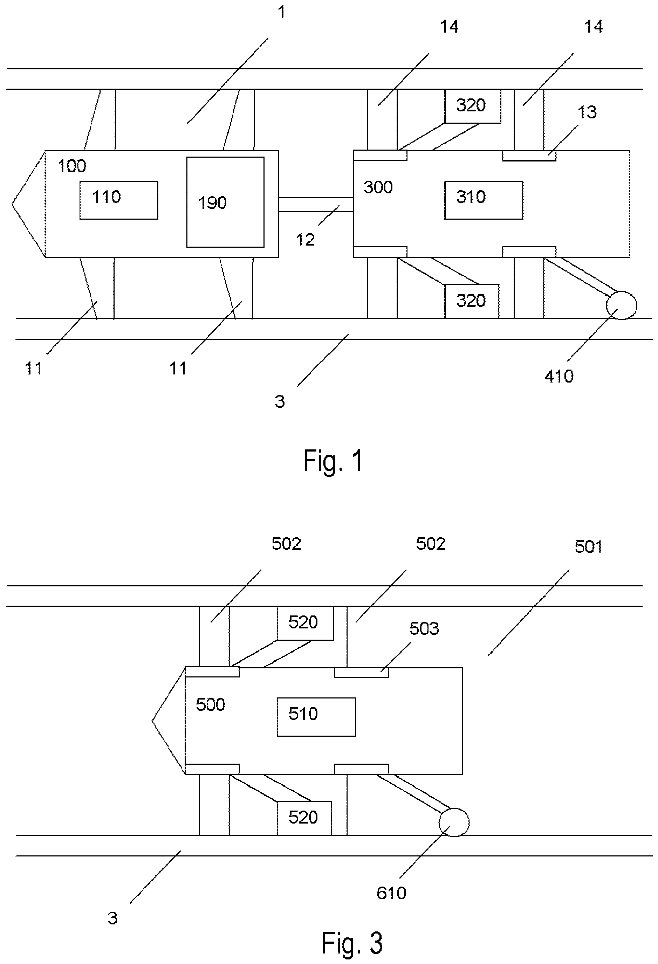

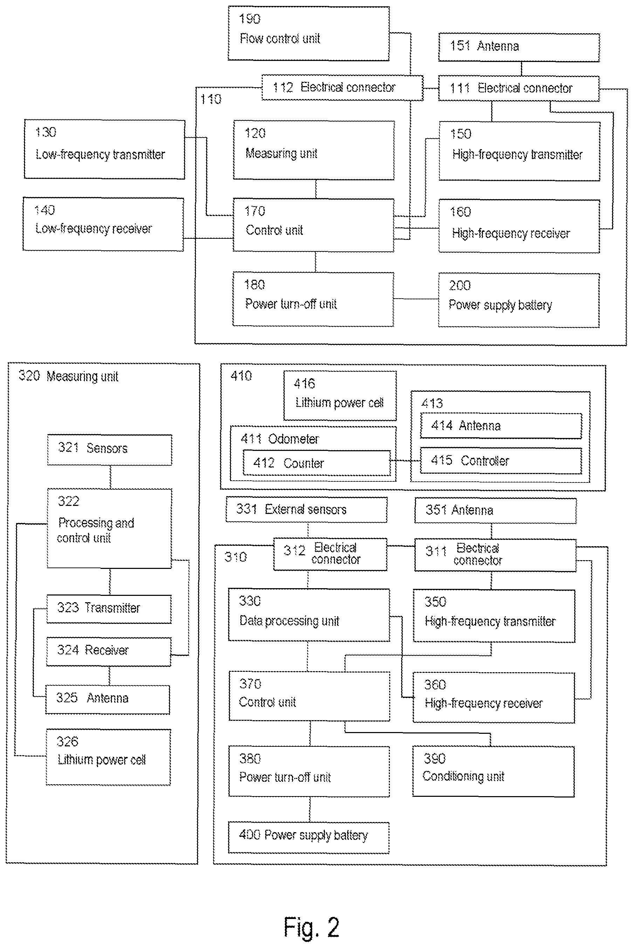

The internal pipe pig embodied in accordance with the first example useful to understand the invention will be described below with reference to Figs. 1 and 2. The internal pipe pig 1 (Fig. 1) consists of several modules 100, 300 connected between each other by a universal joint 12. A sealed capsule 110, a low-frequency transmitter 130 (Fig. 2), a low-frequency receiver 140, and an internal pipe medium flow control unit 190 are placed within the first module 100; polyurethane cups 11 (Fig. 1) overlapping a cross-section of a pipeline 3 are placed on a housing of the first module 100. A sealed capsule 310 is placed within the second module 300, while constant magnets 13 with bundles of steel brushes 14, which provide a passage of a magnetic flux through a diagnosed wall of the steel pipeline and closure through a steel housing of the second module 300, are placed on a surface of the second module 300. Measuring units 320 and a travelled distance meter 410 (Fig. 2) are also installed on a surface of the second module 300 and are fastened on the housing of the module 300 by spring levers (not shown in detail) pressing said units to an inner surface of the pipeline 3.

As shown in Fig. 2, a measuring unit 120, a high-frequency transmitter 150, a high-frequency control signal receiver 160, a control unit 170, a power turn-of unit 180, the internal pipe medium flow control unit 190, power supply batteries 200, for example, in the form of lithium cells, are placed within the capsule 110. The measuring unit 120 includes inertial navigation sensors including three orthogonal acceleration sensors and three orthogonal angular velocity sensors (not shown in the drawings).

An antenna 151 connected to the high-frequency transmitter 150 and to the high-frequency receiver 160 is installed outside the sealed capsule 110. In alternative embodiment, two antennae can be installed, one being for the transmitter 150 and another one being for the receiver 160. An electrical connector 111 is embodied in a housing of the sealed capsule 110, the antenna 151 being connected via said connector to the high-frequency transmitter 150 and the high-frequency receiver 160.

The measuring unit 320 comprises sensors 321, a processing and control unit 322, a high-frequency transmitter 323, a high-frequency receiver 324, a lithium power cell 326, and an antenna 325 embodied as a metallization of a print circuit board on which other electronic components of the measuring unit 320 are placed.

A data processing unit 330, a control unit 370, a high-frequency transmitter 350, a high-frequency receiver 360, a power turn-off unit 380, a conditioning control unit 390 and a power supply battery 400 are placed within the sealed capsule 310. An antenna 351 connected to the high-frequency transmitter 350 and to the high-frequency receiver 360 is installed outside the sealed capsule 310. In alternative embodiment, two antennae can be installed, one being for the transmitter 350 and another one being for the receiver 360. An electrical connector 311 is embodied in a housing of the sealed capsule 310, the antenna 351 being connected via said connector to the high-frequency transmitter 350 and the high-frequency receiver 360. A part of this antenna 351 is within the line-of-sight range of the antenna 325. A distance between the antenna 325 and the antenna 351 is not greater than a value equal to a doubled interior diameter of the pipeline 3 in which the pig 1 has to be run. A distance between the antenna 151 and the antenna 351 is not greater than a sevenfold interior diameter of the pipeline 3 in which the pig 1 has to be run.

In the present example, wireless data transmission means include the high-frequency transmitter 150 and the high-frequency receiver 160 in the sealed capsule 110, the high-frequency transmitter 350 and the high-frequency receiver 360 in the sealed capsule 310, and also the high-frequency transmitter 323 and the high-frequency receiver 324 in the measuring units 320. The wireless data transmission means are capable of transmitting data and comprise means for coding and decoding digital data to be transmitted. The high-frequency electromagnetic signal transmitters 150, 323, 350 comprise a microcontroller which is capable of coding signals according to the Bluetooth standard. The high-frequency receivers 160, 324, 360 comprise a controller for decoding the received signals. The high-frequency receivers 160, 324, 360 also play a role of transmitters for transmission of control signals from the control modules 170 and 370, respectively.

The sensors 321 of the measuring unit 320 include non-destructive testing sensors. The lithium power cell 326 is connected to electronic components of the measuring unit 320. All electrical connections of the measuring unit 320 are sealed by a compound to protect them from the internal pipe medium such that the compound forms a housing of the measuring init 320. In an alternative embodiment, the measuring unit 320 can comprise a metal housing in the form of a box with a cover, so the electronic components of the measuring unit are placed within the housing, the housing is closed by the cover, while sealing components are placed between the housing and the cover.

The non-destructive testing sensors 321 are embodied as magnetic field sensors, the sensor signal processing and control unit 322 is capable of setting time points of interrogating the sensors 321 depending upon a speed and an acceleration of the pig 1. In other embodiment, the non-destructive testing sensors 321 are embodied as ultrasonic transducers, the processing and control unit 322 is capable of controlling a time point of triggering an ultrasonic pulse by an ultrasonic transducer, an ultrasonic pulse frequency and an ultrasonic pulse direction as well as a transmitting/receiving mode of the ultrasonic transducers 321 and a time interval during which the ultrasonic transducers can receive ultrasonic pulses reflected from the internal and external surfaces of the wall of the pipeline 3.

External sensors 331, as included in linear pig speed sensors, an internal pipe medium temperature sensor and an internal pipe medium pressure sensor, are placed at the external side of the sealed capsule 310. Outputs of the external sensors 331 are connected to the data processing unit 330. At the same time, each of the external sensors 331 includes a measurement digitizing circuit, so digitized measured data arrive at an input of the data processing unit 330. In an alternative embodiment, analog signals from the external sensors 331 can arrive for next digitization in the data processing unit 330.

The control unit 370 is capable of controlling the functioning modes of the pig sub-systems, including the functioning modes of the sensors 321 in the measuring unit 320, the operating modes of the low-frequency receiver 140 and the low-frequency transmitter 130 and also of the measuring unit 120 and the flow control unit 190 placed in the sealed capsule 110. The processing and control unit 322 is embodied based on a programmable logic microchip (PLMC); the control unit 170 comprises a programmable controller, while the control unit 370 comprises a microprocessor unit based on a computer board.

The electronic system of the pig 1 comprises several functional units: the measuring units 120, 320, the data processing unit 330, the data transmission unit in the form of the low-frequency transmitter 130 to transmit the data to the outside of the pipeline, the data reception unit in the form of the low-frequency receiver 140 to receive the data from the outside of the pipeline, the pig electronic system power turn-off unit 370, the unit for controlling a pig speed and/or acceleration based on control of the internal pipe medium flow passing from the pipeline interior area behind the pig to the pipeline interior area in front of the pig as it runs through the pipeline, the latter unit being in the form of the flow control module 190, the unit for environmental conditioning control within the sealed gas-filled capsule 310, the latter unit being in the form of the conditioning unit 390. Each of the functional units is controlled by the respective control unit connected to the electromagnetic signal receiver which fulfils functions of the control electromagnetic signal receiver.

The travelled distance measuring unit 410 comprises an odometer 411, which comprises an odometer pulse counter 412, and a high-frequency electromagnetic signal transmitter 413 which comprises an antenna 414 and a controller 415 connected to outputs of the counter 412.

In one example useful to understand the invention, the internal pipe medium flow control module 190 connected to the control unit 170 comprises a bypass device in the form of a tube with a valve, and a drive control unit. The tube with the valve connects the area in front of the pig to the area behind the pig in the course of its movement. The valve comprises mechanical components able to change their positions relatively to the pig body when said components are driven, so the valve is able to change a value of the internal pipe medium flow passing from the pipeline interior area behind the pig to the pipeline interior area in front of the pipeline when the pig runs in the pipeline. The valve comprises an electronically controlled drive capable of changing the position of said mechanical components of the valve and connected to said drive control unit.

In another example useful to understand the invention, the internal pipe medium flow control module 190 can comprise a drive control unit and a bypass device in the form of an electronically controlled drive and two perforated drums, so displacement of one drum relative to another one results in partial alignment of perforations in two drums, so a flow cross-section varies for the medium passing from the pipeline interior area behind the pig to the pipeline interior area in front of the pipeline when the pig runs in the pipeline.

When the internal pipe medium flow through the pig changes, the pig acceleration and speed change as well, therefore, the internal pipe medium flow control module 190 is the pig speed and acceleration control unit. In another embodiment, the pig speed and acceleration control unit can further comprise a mechanism which regulates a friction force between the peripheral components of the pig body and the internal surface of the pipeline.

The data processing unit 330 receiving the data from the travelled distance measuring unit 410, the external sensors 331, the measuring unit 120, transmits the data to the control unit 370 which generates control signals to be transmitted to the control unit 170 via the high-frequency transmitter 350 and the high-frequency receiver 160; being guided by said data, the control unit 170 supplies the control signals to the drive of the flow control unit 190.

The sealed capsule 310 is filled with a gas; there is the functional conditioning unit 390 placed in the capsule and comprising fans and a fan control unit connected to the control unit 370.

The device according to the first example operates as follows.

The pig 1 is placed into a launching chamber and the pumping of a product transported through the pipeline 3 is turned on. The pig 1 subjected to a pressure of the pumped product moves within the pipeline 3. Reference points are selected along a laying route of the pipeline 3 at a distance of from 2 to 5 km from one reference point to another one, and a recorder for receiving signals from the pig 1 should be placed in said points. The reference points are usually selected at places where the pipeline 3 crosses roads, rivers, communication lines, and at places where pipeline valves are mounted. When the pig 1 moves within the pipeline 3, an operator starts out for a location of the nearest designated reference point, places the recorder in close vicinity to the reference point of the pipeline 3 and turns the recorder on to receive signals from the low-frequency transmitter 130 of the pig 1. The recorder receives signals from the electromagnetic signal transmitter 130 and writes a signal reception time into own memory. Then, the operator moves to a location of the next designated reference point of the pipeline 3, waits for arrival of the pig 1, and records a time point when the pig 1 passes through a sequent reference point.

When the pig 1 moves within the pipeline 3, the processing and control unit 322 periodically interrogates the magnetic field sensors 321 whose signals are processed in the processing and control unit 322, coded according to Bluetooth standard, and transmitted via the high-frequency transmitter 323 to the high-frequency receiver 360 where signals are received, and then arrive at the data processing unit 330, are decoded and written to data storage devices of the data processing unit 330 with timing to a time point of receiving said data.

A wheel of the odometer 411 rolls over the internal surface of the pipeline 3, so the counter 412 generates pulses whose number is directly proportional to a distance travelled by the wheel of the odometer 411. The pulses from the counter 412 arrive at the controller 415 which codes the number received from the counter 412 by modulation of an electromagnetic signal emitted by the high-frequency transmitter 413 in the Bluetooth standard. The high-frequency receiver 360 receives electromagnetic signals from the high-frequency transmitter 413 and transmits the received signals to the data processing unit 330 where a signal is decoded, and a number corresponding to readings of the counter 412 is analyzed and written to the data storage device of the data processing unit 330 with timing to a time point of writing said value.

During motion of the pig 1, the control unit 370 periodically supplies control signals for the high-frequency receiver 160 in the module 100 of the pig 1. Signals are coded by modulation of an electromagnetic signal emitted by the high-frequency transmitter 350. The high-frequency receiver 160 of the module 100 receives said signal from the high-frequency transmitter 350 and transmits it to the control unit 170 which decodes the signal and generates a control signal which is supplied to the low-frequency transmitter 130; upon reception of said control signal, said transmitter emits electromagnetic signals at a frequency of 22 Hz, and due to their low frequency, said signals pass through the wall of the pipeline and are received by the operator using the the electromagnetic signal recorder and being at a reference point near the pipeline.

The external sensors 331 (the temperature sensor and the internal pipe medium pressure sensor as well as the pig movement speed sensor) are periodically interrogated by signals from the data processing unit 330. The digitized signals from sensors 331 arrive via the connector 312 at the data processing unit 330 where they are analyzed and are written to the data storage device of the unit 330 timing to a time point of receiving the respective data.

Depending upon a result of analyzing the readings of the temperature sensor included in the external sensors 331, a signal for controlling the operating mode of the conditioning unit 390 arrives from the data processing unit 330 at the control unit 370. Further, readings of temperature sensors placed in the sealed capsule 310 can be used to control the conditioning unit 390.

The data processing unit 330 analyzes the readings of pig speed sensors included in the external sensors 331, the readings of the odometer 411 as well as the readings of angular velocity and linear acceleration sensors of the measuring unit 120. If the analysis results testify for the speed of the pig 1 or the acceleration thereof to be higher than a predetermined threshold, a respective signal is supplied to the control unit 370; upon reception of said signal, the control unit 370 generates a control signal to change the operation mode of the flow control unit 190. Said signal is coded according to the Bluetooth standard and arrives via the high-frequency transmitter 350 and the high-frequency receiver 160 at the control unit 170 where it is decoded. Upon reception of said signal, the control unit 170 generates a control signal which is supplied via the connector 112 to the flow control unit to increase the internal pipe medium through the module 100 (through the bypass valve or using a variation of a relative position of perforated components regulating the flow cross-section through the module 100). In doing so, a pressure difference between the internal pipe medium behind the module 100 and in front of said module increases, and as a consequence, the movement speed of the pig 1 reduces.

If results of the analysis in the data processing unit 330 testify for the speed of the pig 1 to become lower than a predetermine lower threshold, a signal providing reduction in the internal pipe flow through the module 100 is supplied to the control unit 170 such that the speed of the pig 1 gradually increases. In addition, if results of the analysis in the data processing unit 330 testify for the speed of the pig 1 to change essentially, then, a signal indicating a value of a change in the movement speed of the pig 1 is supplied to the control unit 370 from the data processing unit 330. Upon reception of such a signal, the control unit 370 generates a control signal for changing a mode of interrogating the sensors 321, said control signal being coded by modulation of an electromagnetic signal emitted by the high-frequency transmitter 350. The high-frequency receiver 324 of the measuring units 320 receives said signal from the high-frequency transmitter 350 and transmits it to the processing and control unit 322 where said signal is decoded and a periodicity for interrogating the sensors 321 is set, said periodicity corresponding to a value predetermined by the control unit 370.

If results of the analysis in the data processing unit 330 testify for the pig 1 to be in a reception chamber and an excessive pressure is absent in the reception chamber (a value of the internal pipe medium is smaller than a predetermined threshold), then, a pig run end signal arrives from the data processing unit 330 to the control unit 370 which generates a control signal for turning power off from the pig 1, said control signal being supplied to the power turn-off unit 380; upon reception of such a signal, the latter unit turns power off from electronic units placed in the capsule 310.

An operator also can turn power off from the electronic units of the pig 1, said operator being near the reception chamber where the pig 1 presents. To this end, the operator turns on the low-frequency transmitter located outside of the pipeline and supplies a coded signal, for example, a shifted or variable frequency signal or an intermittent signal, to the low-frequency receiver 140 located in the module 100. Having received such a signal via the low-frequency receiver 140, the control unit 170 generates a power turn-off signal which is supplied first to the high-frequency transmitter 150 to transmit a control signal for the power turn-off unit 380 of the module 300, and - upon lapse of a predetermined time - is supplied to the power turn-off unit 180 of the module 100. The control power-off signal received by the high-frequency receiver 360 is decoded in the data processing module 330 and arrives via the control unit 370 at the power turn-off unit 380.

After removal of the pig from the reception chamber using a program started on a laptop placed near the pig, a control signal is supplied via a laptop Bluetooth channel and the high-frequency receiver 360 to the data processing unit 330 to transfer the data from the data storage devices of the latter unit to the laptop. The data processing unit 330 reads data out of its data storage devices and forwards the data to the laptop through the Bluetooth channel via the high-frequency transmitter 350. The data received from the data storage devices of the data processing unit 330 is brought into register with the data written by the operators in the recorders and then analyzed. A conclusion with respect to presence of defects in the wall of the pipeline and with respect to locations of detected defects is made based on the data analysis.

### SECOND EXAMPLE USEFUL TO UNDERSTAND THE INVENTION

An internal pipe pig 501 according to the second example useful to understand the invention comprises a module 500 of the pig 501 (Fig. 3) in which a sealed capsule 510 is placed; constant magnets 503 with bundles of steel brushes 502, which overlap a cross-section of the pipeline 3 and provide a passage of a magnetic flux through a diagnosed wall of the steel pipeline 3 and closure through a steel housing of the module 500, are placed on the housing of the module 500. Measuring units 520 and a travelled distance meter 610 are also installed on a surface of the module 500 and are fastened on the housing of the module 500 by spring levers pressing said units to an inner surface of the pipeline 3.

The measuring unit 520 comprises sensors 521, a processing and control unit 522, a high-frequency transmitter 523, a high-frequency receiver 524, an antenna 525, a lithium power cell 526, and a data storage device. The antenna 525 is embodied as a metallization of a print circuit board on which other electronic components of the measuring unit 520 are placed.

A data processing unit 530, a control unit 570, a high-frequency transmitter 550, a high-frequency receiver 560, a low-frequency transmitter 580, and a power supply battery 600 are placed within the sealed capsule 510. An antenna 551 connected to the high-frequency transmitter 550 and to the high-frequency receiver 560 is installed outside the sealed capsule 510. In alternative examples useful to understand the invention, two antennae can be installed, one being for the transmitter 550 and another one being for the receiver 560. An electrical connector 511 is embodied in a housing of the sealed capsule 510, the antenna 551 being connected via said connector to the transmitter 550 and the receiver 560. A part of the antenna 551 is within the line-of-sight range of the antenna 525 of the measuring unit 520. A distance between the antenna 525 and the antenna 551 is not greater than a value equal to a doubled interior diameter of the pipeline 3 in which the pig 501 has to be run.

In the second example useful to understand the invention, wireless data transmission means include the high-frequency transmitter 550 and the high-frequency receiver 560 in the sealed capsule 510, as well as the high-frequency transmitter 523 and the high-frequency receiver 524 in the measuring units 520. The wireless data transmission means are capable of transmitting digital data and comprise means for coding and decoding digital data to be transmitted. The high-frequency electromagnetic signal transmitters 550, 523 comprise a microcontroller which is capable of coding signals according to the Bluetooth standard. The high-frequency receivers 560, 524 comprise a controller for decoding the received signals. The high-frequency transmitter 550 also plays a role of a transmitter for transmission of control signals from the control module 570.

The sensors 521 of the measuring unit 520 include non-destructive testing sensors. The lithium power cell 526 is connected to electronic components of the measuring unit 520. All electrical connections of the measuring unit 520 are sealed by a compound to protect them from the internal pipe medium such that the compound forms a housing of the measuring init 520. The non-destructive testing sensors 521 are embodied as magnetic field sensors, the processing and control unit 522 is capable of setting time points of interrogating the sensors 521 depending upon a speed and an acceleration of the pig 501.

External sensors 531, as included in linear pig speed sensors, an internal pipe medium temperature sensor and an internal pipe medium pressure sensor, are placed at the external side of the sealed capsule 510. Outputs of the external sensors 531 are connected to a data processing unit 530. At the same time, each of the external sensors 531 includes a measurement digitizing circuit, so digitized measured data arrive at an input of the data processing unit 530. In an alternative embodiment, analog signals from the external sensors 531 can arrive for next digitization in the data processing unit 530.

The control unit 570 is capable of controlling the functioning modes of the pig sub-systems, including the functioning modes of the sensors5321 in the measuring unit 520, the operating modes of the low-frequency transmitter 580 and also of the measuring unit 520. The processing and control unit 522 is embodied based on a programmable logic microchip (PLMC); the control unit 570 comprises a microprocessor unit based on a computer board.

The electronic system of the pig 501 comprises several functional units: the measuring units 520, the data processing unit 530, and the data transmission unit in the form of the low-frequency transmitter 580 to transmit the data to the outside of the pipeline. Each of the functional units is controlled by the respective control unit connected to the electromagnetic signal receiver which fulfils functions of the control electromagnetic signal receiver.

The travelled distance measuring unit 610 comprises an odometer 611, which comprises an odometer pulse counter 612, a lithium power cell 616, a high-frequency electromagnetic signal transmitter 613 which comprises an antenna 614 and a controller 615 connected to outputs of the counter 612.

A data processing unit 630 receiving the data from the travelled distance measuring unit 610 and the external sensors 531 transmits the date to the control unit 570 which generates control signals transmitted to the measuring units 520 via the high-frequency transmitter 550 and the high-frequency receiver 524.

The device according to the second example useful to understand the invention operates as follows.

The pig 501 is placed into a launching chamber and the pumping of a product transported through the pipeline 3 is turned on. The pig 501 subjected to a pressure of the pumped product moves within the pipeline 3. Reference points are selected along a laying route of the pipeline 3 at a distance of from 2 to 5 km from one reference point to another one, and a recorder for receiving signals from the pig 501 should be placed in said points. The reference points are usually selected at places where the pipeline 3 crosses roads, rivers, communication lines, and at places where pipeline valves are mounted. When the pig 501 moves within the pipeline 3, an operator starts out for a location of the nearest designated reference point, places the recorder in close vicinity to the reference point of the pipeline 3 and turns the recorder on to receive signals from the low-frequency transmitter 580 of the pig 501. The recorder receives signals from the transmitter 580 and writes a signal reception time into own memory. Then, the operator moves to a location of the next designated reference point of the pipeline 3, waits for arrival of the pig 501, and records a time point when the pig 501 passes through a sequent reference point.

When the pig 501 moves within the pipeline 3, the processing and control unit 522 periodically interrogates the magnetic field sensors 521 whose signals are written to a data storage device 527 with timing to a time point of interrogating a respective sensor.

A wheel of the odometer 611 rolls over the internal surface of the pipeline 3, so the counter 612 generates pulses whose number is directly proportional to a distance travelled by the wheel of the odometer 611. The pulses from the counter 612 arrive at the controller 615 which codes the number received from the counter 612 by modulation of an electromagnetic signal emitted by the high-frequency transmitter 613 in the Bluetooth standard. The high-frequency receiver 560 receives electromagnetic signals from the high-frequency transmitter 613 and transmits the received signals to the data processing unit 530 where a signal is decoded, and a number corresponding to readings of the counter 612 is analyzed and written to the data storage device of the data processing unit 530 with timing to a time point of writing said value.

If the analysis of the readings of the counter 612 in the data processing unit 530 shows that the pig 501 stands or moves slowly (a rate of changing the readings of the counter 612 is lower than a predetermined threshold), then a signal indicating the slow movement of the pig 501 is supplied from the data processing unit 530 to the control unit 570. Upon reception of such a signal, the control unit 570 generates a control signal to change the mode of interrogating the sensors 521, said control signal being coded by modulation of an electromagnetic signal emitted by the high-frequency transmitter 550. The high-frequency receiver 524 of the measuring units 520 receives said signal from the high-frequency transmitter 550 and transmits it to the processing and control unit 522 where said signal is decoded and a periodicity for interrogating the sensors 521 is set, said periodicity corresponding a value predetermined by the control unit 570.

During motion of the pig 501, the control unit 570 periodically supplies control signals for the low-frequency transmitter 580 which emits electromagneticc signals at a frequency of 22 Hz, and due to their low frequency, said signals pass through the wall of the pipeline and are received by the operator using the electromagnetic signal recorder and being at a reference point near the pipeline.

The external sensors 531 (the temperature sensor and the internal pipe medium pressure sensor) are periodically interrogated by signals from the data processing unit 530. The digitized signals from sensors 531 arrive via the connectors 512 at the data processing unit 530 where they are analyzed and are written to the data storage device of the unit 530 with timing to a time point of receiving the respective data. If results of the analysis testify for the pig being in a reception chamber and an excessive pressure is absent in the reception chamber (a value of the internal pipe medium is smaller than a predetermined threshold), then, a pig passage end signal arrives from the data processing unit 530 to the control unit 570. Upon reception of such a signal, the control unit 570 generates a control signal for turning power off from electronic units placed in the capsule 510.

After removal of the pig from the reception chamber using a program started on a laptop placed near the pig, control signals are supplied via a laptop Bluetooth channel and the high-frequency receivers 524 of the measuring unit 520 to the processing and control units 522 to transfer the data from the data storage devices 527 to the laptop. The processing and control unit 522 reads out the data written in the data storage device 527 and forwards the data to the laptop through the Bluetooth channel via the high-frequency transmitter 523.

Also using the program started on the laptop placed near the pig, control signals are supplied via the laptop Bluetooth channel and the high-frequency receiver 560 in the sealed capsule 510 to the data processing unit 530 to transfer the data from the data storage devices of the unit 530 to the laptop. The control unit 570 reads out the data written in the data storage device of the unit 530 and forwards the data to the laptop through the Bluetooth channel via the high-frequency transmitter 550.

The data received from the data storage devices 527 and the data storage device of the data processing unit 530 is brought into register with the data written by the operators in the recorders, and then analyzed. A conclusion with respect to presence of defects in the wall of the pipeline and with respect to locations of detected defects is made based on the data analysis.

## Claims

1. An internal pipe pig (1, 501) for inspection of a pipeline (3), the internal pipe pig (1, 501) comprising:
a module (300, 500) with a housing;
at least one measuring unit (320, 520) with a housing, wherein the at least one measuring unit (320, 520) is installed on a surface of the module (300, 500) and is fastened on the housing of the module (320, 520) such that the at least one measuring unit (320, 520) is pressed against an inner surface of the pipeline; at least one high-frequency electromagnetic signal transmitter (323, 523) located within the housing of the at least one measuring unit (320, 520);
at least one data processing unit (330, 530) comprised by the module (300, 500):, and
at least one high-frequency electromagnetic signal receiver (360, 560) connected to the at least one data processing unit (330, 530) and configured for receiving data transmitted from the at least one high-frequency electromagnetic signal transmitter (323, 523).

2. The internal pipe pig (1, 501) according to claim 1, further comprising:
a sealed capsule (310, 510) placed within the module (300, 500) and enclosing the at least one data processing unit (330, 530) and the at least one high-frequency electromagnetic signal receiver (360, 560),
an antenna (351, 551) being located outside the capsule (310, 510), the antenna (351, 551) being connected to the at least one data processing unit (330, 530), wherein the antenna (351, 551) is connected to the at least one high-frequency electromagnetic signal receiver (360, 560) via an electric connector (311, 511) in a housing of the capsule (310).

3. The internal pipe pig (1, 501) according to claim 2, wherein at least a part of an antenna (325, 525) of the high-frequency electromagnetic signal transmitter (323, 523) is within a line-of-sight range of at least a part of the antenna (351, 551) of the at least one high-frequency electromagnetic signal receiver (360, 560).

4. The internal pipe pig (1, 501) according to claim 3, wherein a distance between the antenna (325, 525) of the at least one high-frequency electromagnetic signal transmitter (323, 523) and the antenna (351, 551) of the at least one high-frequency electromagnetic signal receiver (360, 560) does not exceed a value equal to a doubled interior diameter of the pipeline (3).

5. The internal pipe pig (1, 501) according to claim 1, wherein the at least one measuring unit (320, 520) comprises:
at least one sensor (321, 521);
a sensor signal processing and control unit (322, 522) that includes an amplifier and an analog-to-digital converter, wherein an output of the amplifier is connected to an input of the analog-to-digital converter, and wherein an output of the analog-to-digital converter is connected to an input of the at least one high-frequency electromagnetic signal transmitter (323, 523) of the electronics system;
a high-frequency electromagnetic signal transmitter (323, 523); and
at least one power cell (326, 526);
wherein the at least one sensor (321, 521) is connected to the sensor signal processing and control unit (322, 522) and also connected to the high-frequency electromagnetic signal transmitter (323, 523) of the at least one measuring unit (320, 520), an output of the at least one sensor (321, 521) being connected to an input of the amplifier.

6. The internal pipe pig (1, 501) according to claim 5, wherein all electrical connections of the high-frequency electromagnetic signal transmitter (323, 523) of the at least one measuring unit (320, 520) and the measuring unit (320, 520) are sealed using a sealant to protect against an internal pipeline medium.

7. The internal pipe pig (1, 501) according to claim 1, wherein the at least one measuring unit (320, 520) comprises at least one sensor (321, 521) embodied as a non-destructive testing sensor.

8. The internal pipe pig (1, 501) according to claim 1, further comprising a control unit (370, 570) and a control electromagnetic signal transmitter (350, 550) connected thereto, and a control electromagnetic signal receiver (160), the control unit (370) being configured to control functioning modes of at least one pig subsystem, the control electromagnetic signal transmitter (350) comprising a control signal encoder, the control electromagnetic signal receiver (360) comprising a control signal decoder, the control unit (370) comprising one of: a programmable logic microchip, a programmable controller, a processor unit, and an on-board computer.

9. The internal pipe pig (1, 501) according to claim 1 or 5, wherein the at least one measuring unit (320, 520) contains at least one non-destructive testing sensor (321, 521) formed as an ultrasonic transducer, the sensor signal processing and control unit (322, 522) being configured to control a time point of triggering an ultrasonic pulse by one of: an ultrasonic transducer, an ultrasonic pulse frequency, an ultrasonic pulse direction, transmitting/receiving modes of the ultrasonic transducer, a time interval during which the ultrasonic transducer can receive ultrasonic pulses.

10. The internal pipe pig (1, 501) according to claim 1, wherein the pig comprises a plurality of sealed capsules (110, 310, 510), wherein the at least one high-frequency electromagnetic signal transmitter (323, 523) is installed in at least one of the capsules (110, 310, 510), and the at least one high-frequency electromagnetic signal receiver (360, 560) is installed in at least one of other capsules (110, 310, 510).

11. A method for internal-pipe testing a pipeline (3), the method being performed by an internal pipe pig (1, 501) according to any one of the preceding claims, the method comprising the steps of:
providing the internal pipe pig (1, 501);
passing the internal pipe pig (1, 501) within the pipeline (3);;
measuring physical values that define a pipeline (3) state using the at least one measuring unit (320, 520) of the pipe pig (1, 501);
converting and storing, by the at least one data processing unit (330, 530) of the pipe pig (1, 501), measured physical values in a data storage device of the internal pipe pig (1, 501) while the pig (1, 501) passes through the pipeline (3);
processing the measured physical values after the pig (1, 501) passes through the pipeline (3); and
transmitting the measured physical values from the at least one measuring unit (320, 520) to the at least one data processing unit (330, 530) through a high-frequency radio channel while the pig (1, 501) passes through the pipeline (3).

12. The method according to claim 11, further comprising:
generating control signals using at least one control unit (370, 570) of the pipe pig (1, 501) for controlling the functioning modes of the internal pipe pig (1, 501);
coding the control signals and transmitting the coded control electromagnetic signals through the high-frequency channel to functional units associated with the internal pipe pig (1, 501) and that are spatially separated from the control unit (370, 570);
receiving the encoded control electromagnetic signals by at least one functional unit;
decoding the received coded control electromagnetic signals; and
changing a functioning mode of a respective functional unit in accordance with the decoded signals.

13. The method according to claim 12, further comprising:
using functional units selected from the group including at least one measuring unit (320, 520), at least one data processing unit (330, 530), at least one unit for transmitting data outside the pipeline (3), a unit for transmitting and/or receiving data for ground tracking a pig position in the pipeline (3), at least one unit (380) for turning on/off power for the electronic system of the pig (1, 501), a pig speed and/or acceleration control unit, an internal pipe medium flow control unit (190), at least one unit for environmental conditioning control within a sealed capsule for placement of electronic components of the pig's electronic system, as said functional units; and
setting test points for interrogation of non-destructive testing sensors formed as magnetic field sensors and/or pipeline interior geometry sensors by using control electromagnetic signals received by the at least one measuring unit (320, 520).

14. The method according to claim 12, further comprising:
using functional units selected from the group including at least one measuring unit (320, 520), at least one data processing unit (330, 530), at least one unit for transmitting data outside the pipeline (3), a unit for transmitting and/or receiving data for ground tracking a pig position in the pipeline (3), at least one unit (380) for turning on/off power for the electronic system of the pig (1, 501), a pig speed and/or acceleration control unit, an internal pipe medium flow control unit (190), at least one unit for environmental conditioning control within a sealed capsule for placement of electronic components of the pig's electronic system, as said functional units; and
changing a value and/or direction of the internal pipe medium flow, which passes from a pipeline interior area behind the pig (1, 501) to a pipeline interior area in front of the pig (1, 501) as it passes through the pipeline (3), by means of changing a position and/or orientation of mechanical components of a bypass device with a electronically controlled drive relatively to the pig body.

15. The method according to claim 14, further comprising:
generating control signals for the electronically controlled drive in a drive control unit based on electromagnetic data signals received from a travelled distance measuring unit and/or a medium pressure measuring unit and/or a pig speed and/or acceleration measuring unit.

## Patentansprüche

1. Innenrohrmolch (1, 501) für die Inspektion einer Rohrleitung (3), wobei der Innenrohrmolch (1, 501) umfasst:
ein Modul (300, 500) mit einem Gehäuse;
wenigstens eine Messeinheit (320, 520) mit einem Gehäuse, wobei die wenigstens eine Messeinheit (320, 520) auf einer Oberfläche des Moduls (300, 500) installiert ist und auf dem Gehäuse des Moduls (300, 500) derart befestigt ist, dass die wenigstens eine Messeinheit (320, 520) gegen eine Innenfläche der Rohrleitung gedrückt wird;
wenigstens einen elektromagnetischen Hochfrequenzsignalgeber (323, 523), der in dem Gehäuse der wenigstens einen Messeinheit (320, 520) angeordnet ist;
wenigstens eine Datenverarbeitungseinheit (330, 530), die in dem Modul (300, 500) enthalten ist; und
wenigstens einen elektromagnetischen Hochfrequenzsignalempfänger (360, 560), der mit der wenigstens einen Datenverarbeitungseinheit (330, 530) verbunden ist und dazu konfiguriert ist, von dem wenigstens einen elektromagnetischen Hochfrequenzsignalgeber (323, 523) übertragene Daten zu empfangen.

2. Innenrohrmolch (1, 501) nach Anspruch 1, ferner umfassend:
eine abgedichtete Kapsel (310, 510), die in dem Modul (300, 500) positioniert ist und die wenigstens eine Datenverarbeitungseinheit (330, 530) und den wenigstens einen elektromagnetischen Hochfrequenzsignalempfänger (360, 560) umschließt,
eine Antenne (351, 551), die außerhalb der Kapsel (310, 510) angeordnet ist, wobei die Antenne (351, 551) mit der wenigstens einen Datenverarbeitungseinheit (330, 530) verbunden ist, wobei die Antenne (351, 551) mit dem wenigstens einen elektromagnetischen Hochfrequenzsignalempfänger (360, 560) über einen elektrischen Verbinder (311, 511) in einem Gehäuse der Kapsel (310) verbunden ist.

3. Innenrohrmolch (1, 501) nach Anspruch 2, wobei wenigstens ein Teil einer Antenne (325, 525) des elektromagnetischen Hochfrequenzsignalgebers (323, 523) in einem Sichtlinienbereich wenigstens eines Teils der Antenne (351, 551) des wenigstens einen elektromagnetischen Hochfrequenzsignalempfängers (360, 560) liegt.

4. Innenrohrmolch (1, 501) nach Anspruch 3, wobei ein Abstand zwischen der Antenne (325, 525) des wenigstens einen elektromagnetischen Hochfrequenzsignalgebers (323, 523) und der Antenne (351, 551) des wenigstens einen elektromagnetischen Hochfrequenzsignalempfängers (360, 560) einen Wert nicht überschreitet, der gleich einem doppelten Innendurchmesser der Rohrleitung (3) ist.

5. Innenrohrmolch (1, 501) nach Anspruch 1, wobei die wenigstens eine Messeinheit (320, 520) umfasst:
wenigstens einen Sensor (321, 521);
eine Sensorsignalverarbeitungs- und Steuereinheit (322, 522), die einen Verstärker und einen Analog-Digital-Wandler aufweist, wobei ein Ausgang des Verstärkers mit einem Eingang des Analog-Digital-Wandlers verbunden ist, und wobei ein Ausgang des Analog-Digital-Wandlers mit einem Eingang des wenigstens einen elektromagnetischen Hochfrequenzsignalgebers (323, 523) des Elektroniksystems verbunden ist;
einen elektromagnetischen Hochfrequenzsignalgeber (323, 523); und
wenigstens eine Leistungszelle (326, 526);
wobei der wenigstens eine Sensor (321, 521) mit der Sensorsignalverarbeitungs- und Steuereinheit (322, 522) verbunden ist und auch mit dem elektromagnetischen Hochfrequenzsignalgeber (323, 523) der wenigstens einen Messeinheit (320, 520) verbunden ist, wobei ein Ausgang des wenigstens einen Sensors (321, 521) mit einem Eingang des Verstärkers verbunden ist.

6. Innenrohrmolch (1, 501) nach Anspruch 5, wobei alle elektrischen Verbindungen des elektromagnetischen Hochfrequenzsignalgebers (323, 523) der wenigstens einen Messeinheit (320, 520) und die Messeinheit (320, 520) abgedichtet sind, wobei ein Dichtungsmittel zum Schutz gegen ein Innenrohrleitungsmedium verwendet wird.

7. Innenrohrmolch (1, 501) nach Anspruch 1, wobei die wenigstens eine Messeinheit (320, 520) wenigstens einen Sensor (321, 521) aufweist, der als ein zerstörungsfreier Prüfsensor ausgeführt ist.

8. Innenrohrmolch (1, 501) nach Anspruch 1, der ferner eine Steuereinheit (370, 570) und einen mit ihr verbundenen elektromagnetischen Steuersignalgeber (350, 550) und einen elektromagnetischen Steuersignalempfänger (160) aufweist, wobei die Steuereinheit (370) dazu ausgebildet ist, die Funktionsmodi wenigstens eines Molchsubsystems zu steuern, wobei der elektromagnetische Steuersignalgeber (350) einen Steuersignal-Encoder aufweist, der elektromagnetische Steuersignalempfänger (360) einen Steuersignal-Decoder aufweist, wobei die Steuereinheit (370) eines von: einem programmierbaren Logik-Mikrochip, einer programmierbaren Steuereinrichtung, einer Prozessoreinheit und einem Bordcomputer umfasst.

9. Innenrohrmolch (1, 501) nach Anspruch 1 oder 5, wobei die wenigstens eine Messeinheit (320, 520) wenigstens einen zerstörungsfreien Prüfsensor (321, 521) enthält, der als ein Ultraschallwandler ausgebildet ist, wobei die Sensorsignalverarbeitungs- und Steuereinheit (322, 522) dazu konfiguriert ist, einen Zeitpunkt des Auslösens eines Ultraschallimpulses zu steuern durch eines von: einem Ultraschallwandler, einer Ultraschallimpulsfrequenz, einer Ultraschallimpulsrichtung, Übertragungs-/Empfangsmodi des Ultraschallwandlers, einem Zeitintervall, während dem der Ultraschallwandler Ultraschallimpulse empfangen kann.

10. Innenrohrmolch (1, 501) nach Anspruch 1, wobei der Molch eine Vielzahl von abgedichteten Kapseln (110, 310, 510) aufweist, wobei der wenigstens eine elektromagnetische Hochfrequenzsignalgeber (323, 523) in wenigstens einer der Kapseln (110, 310, 510) installiert ist und der wenigstens eine elektromagnetische Hochfrequenzsignalempfänger (360, 560) in wenigstens einer anderen der Kapseln (110, 310, 510) installiert ist.

11. Verfahren zum Innenrohrprüfen einer Rohrleitung (3), wobei das Verfahren durch einen Innenrohrmolch (1, 501) nach einem der vorhergehenden Ansprüche durchgeführt wird, wobei das Verfahren die Schritte umfasst:
Bereitstellen des Innenrohrmolchs (1, 501);
Verschieben des Innenrohrmolchs (1, 501) in der Rohrleitung (3);
Messen der physikalischen Werte, die einen Zustand der Rohrleitung (3) definieren unter Verwendung der wenigstens einen Messeinheit (320, 520) des Rohrmolchs (1, 501);
Konvertieren und Speichern durch die wenigstens eine Datenverarbeitungseinheit (330, 530) des Rohrmolchs (1, 501) von gemessenen physikalischen Werten in einer Datenspeichervorrichtung des Innenrohrmolchs (1, 501), während der Molch (1, 501) die Rohrleitung (3) durchläuft;
Verarbeiten der gemessenen physikalischen Werte, nachdem der Molch (1, 501) die Rohrleitung (3) durchlaufen hat; und
Übertragen der von der wenigstens einen Messeinheit (320, 520) gemessenen physikalischen Werte an die wenigstens eine Datenverarbeitungseinheit (330, 530) durch einen Hochfrequenzfunkkanal, während der Molch (1, 501) die Rohrleitung (3) durchläuft.

12. Verfahren nach Anspruch 11, ferner umfassend:
Erzeugen von Steuersignalen unter Verwendung wenigstens einer Steuereinheit (370, 570) des Rohrmolchs (1, 501) zum Steuern der Funktionsmodi des Innenrohrmolchs (1, 501);
Codieren der Steuersignale und Übertragen der codierten elektromagnetischen Steuersignale durch den Hochfrequenzkanal an funktionale Einheiten, die dem Innenrohrmolch (1, 501) zugeordnet sind und die räumlich von der Steuereinheit (370, 570) getrennt sind;
Empfangen der codierten elektromagnetischen Steuersignale durch wenigstens eine funktionale Einheit;
Decodieren der empfangenen codierten elektromagnetischen Steuersignale; und
Wechseln eines Funktionsmodus einer jeweiligen funktionalen Einheit gemäß den decodierten Signalen.

13. Verfahren nach Anspruch 12, ferner umfassend:
Verwenden von funktionalen Einheiten, die aus der Gruppe ausgewählt sind, die wenigstens eine Messeinheit (320, 520), wenigstens eine Datenverarbeitungseinheit (330, 530), wenigstens eine Einheit zum Übertragen von Daten außerhalb der Rohrleitung (3), eine Einheit zum Übertragen und/oder Empfangen von Daten zum Verfolgen einer Molchposition in der Rohrleitung (3) vom Boden aus, wenigstens eine Einheit (380) zum An- und Abschalten des Stroms für das elektronische System des Molchs (1, 501), eine Molchgeschwindigkeits- und/oder -beschleunigungssteuereinheit, eine Innenrohrleitungsmediums-Strömungssteuereinheit (190), wenigstens eine Einheit für die Umgebungsbedingungssteuerung in einer abgedichteten Kapsel für das Platzieren von elektronischen Komponenten des Molchelektroniksystems als die genannten funktionalen Einheiten umfasst; und
Setzen von Prüfpunkten für die Abfrage an zerstörungsfreie Prüfsensoren, die als Magnetfeldsensoren und/oder Rohrleitungsinnengeometriesensoren ausgebildet sind, durch die Verwendung von elektromagnetischen Steuersignalen, die von der wenigstens einen Messeinheit (320, 520) empfangen wurden.

14. Verfahren nach Anspruch 12, ferner umfassend:
Verwenden von funktionalen Einheiten, die aus der Gruppe ausgewählt sind, die wenigstens eine Messeinheit (320, 520), wenigstens eine Datenverarbeitungseinheit (330, 530), wenigstens eine Einheit zum Übermitteln von Daten außerhalb der Rohrleitung (3), eine Einheit zum Übermitteln und/oder Empfangen von Daten zum Verfolgen einer Molchposition in der Rohrleitung (3) vom Boden aus, wenigstens eine Einheit (380) zum An- und Abschalten des Stroms für das elektronische System des Molchs (1, 501), eine Molchgeschwindigkeits- und/oder -beschleunigungssteuereinheit, eine Innenrohrleitungsmediums-Strömungssteuereinheit (190), wenigstens eine Einheit für die Umgebungsbedingungssteuerung in einer abgedichteten Kapsel für das Platzieren von elektronischen Komponenten des Molchelektroniksystems als die genannten funktionalen Einheiten umfasst; und
Ändern eines Wertes und/oder Richtung des Innenrohrmediumsstroms, der von einem Rohrleitungsinnenbereich hinter dem Molch (1, 501) auf einen Rohrleitungsinnenbereich vor dem Molch (1, 501) übergeht, wenn er die Rohrleitung (3) durchläuft, durch Wechseln einer Position und/oder Ausrichtung von mechanischen Komponenten einer Bypass-Vorrichtung mit einem bezogen auf den Molchkörper elektronisch gesteuerten Antrieb.

15. Verfahren nach Anspruch 14, ferner umfassend:
Erzeugen von Steuersignalen für den elektronisch gesteuerten Antrieb in einer Antriebssteuereinheit basierend auf elektromagnetischen Datensignalen, die von einer Messeinheit für die zurückgelegte Strecke und/oder einer Mediumdruckmesseinheit und/oder einer Molchgeschwindigkeits- und/oder -beschleunigungsmesseinheit empfangen wurden.

## Revendications

1. Racleur de tuyau interne (1, 501) pour l'inspection d'un pipeline (3), le racleur de tuyau interne (1, 501) comprenant :
un module (300, 500) muni d'un logement ;
au moins une unité de mesure (320, 520) munie d'un logement, dans lequel l'au moins une unité de mesure (320, 520) est installée sur une surface du module (300, 500) et est fixée sur le logement du module (300, 500) de telle sorte que l'au moins une unité de mesure (320, 520) soit pressée contre une surface interne du pipeline ;
au moins un émetteur de signal électromagnétique hautes fréquences (323, 523) qui est situé à l'intérieur du logement de l'au moins une unité de mesure (320, 520) ;
au moins une unité de traitement de données (330, 530) qui est constituée par le module (300, 500) ; et
au moins un récepteur de signal électromagnétique hautes fréquences (360, 560) qui est connecté à l'au moins une unité de traitement de données (330, 530) et qui est configuré pour recevoir des données qui sont émises depuis l'au moins un émetteur de signal électromagnétique hautes fréquences (323, 523).

2. Racleur de tuyau interne (1, 501) selon la revendication 1, comprenant en outre :
une capsule scellée (310, 510) qui est placée à l'intérieur du module (300, 500) et qui renferme l'au moins une unité de traitement de données (330, 530) et l'au moins un récepteur de signal électromagnétique hautes fréquences (360, 560) ;
une antenne (351, 551) qui est située à l'extérieur de la capsule (310, 510), l'antenne (351, 551) étant connectée à l'au moins une unité de traitement de données (330, 530), dans lequel l'antenne (351, 551) est connectée à l'au moins un récepteur de signal électromagnétique hautes fréquences (360, 560) via un connecteur électrique (311, 511) dans un logement de la capsule (310).

3. Racleur de tuyau interne (1, 501) selon la revendication 2, dans lequel au moins une partie d'une antenne (325, 525) de l'émetteur de signal électromagnétique hautes fréquences (323, 523) est à l'intérieur d'une portée de ligne de visée d'au moins une partie de l'antenne (351, 551) de l'au moins un récepteur de signal électromagnétique hautes fréquences (360, 560).

4. Racleur de tuyau interne (1, 501) selon la revendication 3, dans lequel une distance entre l'antenne (325, 525) de l'au moins un émetteur de signal électromagnétique hautes fréquences (323, 523) et l'antenne (351, 551) de l'au moins un récepteur de signal électromagnétique hautes fréquences (360, 560) n'excède pas une valeur qui est égale au double d'un diamètre intérieur du pipeline (3).

5. Racleur de tuyau interne (1, 501) selon la revendication 1, dans lequel l'au moins une unité de mesure (320, 520) comprend :
au moins un capteur (321, 521) ;
une unité de traitement de signal de capteur et de commande (322, 522) qui inclut un amplificateur et un convertisseur analogique-numérique, dans lequel une sortie de l'amplificateur est connectée à une entrée du convertisseur analogique-numérique, et dans lequel une sortie du convertisseur analogique-numérique est connectée à une entrée de l'au moins un émetteur de signal électromagnétique hautes fréquences (323, 523) du système électronique ;
un émetteur de signal électromagnétique hautes fréquences (323, 523) ; et
au moins une cellule d'alimentation (326, 526) ; dans lequel :
l'au moins un capteur (321, 521) est connecté à l'unité de traitement de signal de capteur et de commande (322, 522) et est également connecté à l'émetteur de signal électromagnétique hautes fréquences (323, 523) de l'au moins une unité de mesure (320, 520), une sortie de l'au moins un capteur (321, 521) étant connectée à une entrée de l'amplificateur.

6. Racleur de tuyau interne (1, 501) selon la revendication 5, dans lequel toutes les connexions électriques de l'émetteur de signal électromagnétique hautes fréquences (323, 523) de l'au moins une unité de mesure (320, 520) et de l'unité de mesure (320, 520) sont scellées en utilisant un agent de scellement étanche afin d'assurer une protection vis-à-vis d'un milieu de pipeline interne.

7. Racleur de tuyau interne (1, 501) selon la revendication 1, dans lequel l'au moins une unité de mesure (320, 520) comprend au moins un capteur (321, 521) qui est mis en oeuvre en tant que capteur de test non destructeur.

8. Racleur de tuyau interne (1, 501) selon la revendication 1, comprenant en outre une unité de commande (370, 570) et un émetteur de signal électromagnétique de commande (350, 550) qui lui est connecté, et un récepteur de signal électromagnétique de commande (160), l'unité de commande (370) étant configurée de manière à ce qu'elle commande des modes de fonctionnement d'au moins un sous-système de racleur, l'émetteur de signal électromagnétique de commande (350) comprenant un codeur de signal de commande, le récepteur de signal électromagnétique de commande (360) comprenant un décodeur de signal de commande, l'unité de commande (370) comprenant un moyen pris parmi : une micropuce logique programmable, un contrôleur programmable, une unité de processeur et un ordinateur embarqué.

9. Racleur de tuyau interne (1, 501) selon la revendication 1 ou 5, dans lequel l'au moins une unité de mesure (320, 520) contient au moins un capteur de test non destructeur (321, 521) qui est formé en tant que transducteur à ultrasons, l'unité de traitement de signal de capteur et de commande (322, 522) étant configurée de manière à ce qu'elle commande un point temporel de déclenchement d'une impulsion ultrasonore au moyen d'un parmi : un transducteur à ultrasons, une fréquence d'impulsion ultrasonore, une direction d'impulsion ultrasonore, des modes émission/réception du transducteur à ultrasons, un intervalle temporel pendant lequel le transducteur à ultrasons peut recevoir des impulsions ultrasonores.

10. Racleur de tuyau interne (1, 501) selon la revendication 1, dans lequel le racleur comprend une pluralité de capsules scellées (110, 310, 510), dans lequel l'au moins un émetteur de signal électromagnétique hautes fréquences (323, 523) est installé dans au moins l'une des capsules (110, 310, 510), et l'au moins un récepteur de signal électromagnétique hautes fréquences (360, 560) est installé dans au moins l'une d'autres capsules (110, 310, 510).

11. Procédé pour le test d'un tuyau interne d'un pipeline (3), le procédé étant réalisé au moyen d'un racleur de tuyau interne (1, 501) selon l'une quelconque des revendications précédentes, le procédé comprenant les étapes qui suivent :
la fourniture du racleur de tuyau interne (1, 501) ;
le passage du racleur de tuyau interne (1, 501) à l'intérieur du pipeline (3) ;
la mesure de valeurs physiques qui définissent un état du pipeline (3) en utilisant l'au moins une unité de mesure (320, 520) du racleur de tuyau (1, 501) ;
la conversion et le stockage, par l'au moins une unité de traitement de données (330, 530) du racleur de tuyau (1, 501), de valeurs physiques mesurées dans un dispositif de stockage de données du racleur de tuyau interne (1, 501) tandis que le racleur (1, 501) passe au travers du pipeline (3) ;
le traitement des valeurs physiques mesurées après que le racleur (1, 501) est passé au travers du pipeline (3) ; et
la transmission des valeurs physiques mesurées depuis l'au moins une unité de mesure (320, 520) jusqu'à l'au moins une unité de traitement de données (330, 530) par l'intermédiaire d'un canal radio hautes fréquences tandis que le racleur (1, 501) passe au travers du pipeline (3).

12. Procédé selon la revendication 11, comprenant en outre :
la génération de signaux de commande en utilisant au moins une unité de commande (370, 570) du racleur de tuyau (1, 501) pour commander les modes de fonctionnement du racleur de tuyau interne (1, 501) ;
le codage des signaux de commande et la transmission des signaux électromagnétiques de commande codés par l'intermédiaire du canal hautes fréquences à des unités fonctionnelles qui sont associées au racleur de tuyau interne (1, 501) et qui sont séparées spatialement de l'unité de commande (370, 570) ;
la réception des signaux électromagnétiques de commande codés par au moins une unité fonctionnelle ;
le décodage des signaux électromagnétiques de commande codés reçus ; et
la modification d'un mode de fonctionnement d'une unité fonctionnelle respective conformément aux signaux décodés.

13. Procédé selon la revendication 12, comprenant en outre :
l'utilisation d'unités fonctionnelles qui sont sélectionnées parmi le groupe qui inclut au moins une unité de mesure (320, 520), au moins une unité de traitement de données (330, 530), au moins une unité pour transmettre des données à l'extérieur du pipeline (3), une unité pour émettre et/ou recevoir des données pour un pistage au sol d'une position de racleur dans le pipeline (3), au moins une unité (380) pour activer/couper l'alimentation du système électronique du racleur (1, 501), une unité de commande de vitesse et/ou d'accélération de racleur, une unité de régulation d'écoulement de milieu de tuyau interne (190), au moins une unité pour le contrôle des conditions environnementales à l'intérieur d'une capsule scellée pour le positionnement de composants électroniques du système électronique du racleur, en tant que dites unités fonctionnelles ; et
la définition de points de test pour une interrogation de capteurs de test non destructifs qui sont formés en tant que capteurs de champ magnétique et/ou que capteurs de géométrie intérieure de pipeline en utilisant des signaux électromagnétiques de commande qui sont reçus par l'au moins une unité de mesure (320, 520).

14. Procédé selon la revendication 12, comprenant en outre :
l'utilisation d'unités fonctionnelles qui sont sélectionnées parmi le groupe qui inclut au moins une unité de mesure (320, 520), au moins une unité de traitement de données (330, 530), au moins une unité pour transmettre des données à l'extérieur du pipeline (3), une unité pour émettre et/ou recevoir des données pour un pistage au sol d'une position de racleur dans le pipeline (3), au moins une unité (380) pour activer/couper l'alimentation du système électronique du racleur (1, 501), une unité de commande de vitesse et/ou d'accélération de racleur, une unité de régulation d'écoulement de milieu de tuyau interne (190), au moins une unité pour le contrôle des conditions environnementales à l'intérieur d'une capsule scellée pour le positionnement de composants électroniques du système électronique du racleur, en tant que dites unités fonctionnelles ; et
la modification d'une valeur et/ou d'une direction de l'écoulement de milieu de tuyau interne, lequel passe depuis une zone intérieure de pipeline derrière le racleur (1, 501) jusqu'à une zone intérieure de pipeline à l'avant du racleur (1, 501) lorsqu'il passe au travers du pipeline (3), au moyen de la modification d'une position et/ou d'une orientation de composants mécaniques d'un dispositif de dérivation à l'aide d'un moyen de pilotage commandé électroniquement en relation avec le corps du racleur.

15. Procédé selon la revendication 14, comprenant en outre :
la génération de signaux de commande pour le moyen de pilotage commandé électroniquement dans une unité de commande de moyen de pilotage sur la base de signaux de données électromagnétiques qui sont reçus depuis une unité de mesure de distance parcourue et/ou une unité de mesure de pression de milieu et/ou une unité de mesure de vitesse et/ou d'accélération de racleur.
